(19) **Europäisches Patentamt / European Patent Office / Office européen des brevets**

(11) **EP 2 908 527 A1**

(12) # EUROPEAN PATENT APPLICATION
published in accordance with Art. 153(4) EPC

(43) Date of publication:
**19.08.2015 Bulletin 2015/34**

(21) Application number: **13844654.7**

(22) Date of filing: **09.10.2013**

(51) Int Cl.:
**H04N 19/50** *(2014.01)*    **H04N 13/02** *(2006.01)*

(86) International application number:
**PCT/JP2013/077516**

(87) International publication number:
**WO 2014/057989 (17.04.2014 Gazette 2014/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.10.2012 JP 2012227262**

(71) Applicant: **National Institute of Information and Communication Technology**
**Tokyo 184-8795 (JP)**

(72) Inventors:
• **PANAHPOUR TEHRANI, Mehrdad**
**Koganei-shi**
**Tokyo 184-8795 (JP)**

• **ISHIKAWA, Akio**
**Koganei-shi**
**Tokyo 184-8795 (JP)**
• **KAWAKITA, Masahiro**
**Koganei-shi**
**Tokyo 184-8795 (JP)**
• **INOUE, Naomi**
**Koganei-shi**
**Tokyo 184-8795 (JP)**
• **FUJII, Toshiaki**
**Nagoya-shi**
**Aichi 464-8601 (JP)**

(74) Representative: **Kuhnen & Wacker**
**Patent- und Rechtsanwaltsbüro**
**Prinz-Ludwig-Straße 40A**
**85354 Freising (DE)**

(54) **DEVICE, PROGRAM, AND METHOD FOR REDUCING DATA SIZE OF MULTIPLE IMAGES CONTAINING SIMILAR INFORMATION**

(57) Provided is a method including the steps of: generating a synthesized image corresponding to a target image based on a first reference image and a second reference image; generating side information which is information on a virtual view at a location of the target image, based on at least one of the target image and the synthesized image; generating a gradient image based on the side information; determining a factor in accordance with a gradient for each pixel location of the gradient image, and performing a modulo operation using, as a modulus, a factor corresponding to an intensity value at each pixel location of the target image, to generate a remainder image composed of remainders of respective pixel locations calculated by the modulo operation; and outputting the first reference image, the second reference image and the remainder image as information representing the target image, the first reference image and the second reference image.

FIG.6

| ENCODING PROCESS | DECODING PROCESS |
|---|---|
| S100 ACQUIRE AND STORE A PLURALITY OF IMAGES, AND SET TARGET IMAGE AND REFERENCE IMAGES | S200 ACQUIRE INFORMATION OUTPUT AS A RESULT OF ENCODING PROCESS |
| S102 GENERATE SYNTHESIZED IMAGE CORRESPONDING TO TARGET IMAGE FROM REFERENCE IMAGES | S202 GENERATE SYNTHESIZED IMAGE CORRESPONDING TO TARGET IMAGE FROM REFERENCE IMAGES |
| S104 GENERATE SIDE INFORMATION BASED ON TARGET IMAGE AND SYNTHESIZED IMAGE | S204 GENERATE SIDE INFORMATION FROM ACQUIRED INFORMATION |
| S106 GENERATE GRADIENT IMAGE FROM SIDE INFORMATION | S206 GENERATE GRADIENT IMAGE FROM GENERATED SIDE INFORMATION |
| S108 GENERATE REMAINDER IMAGE FROM GENERATED GRADIENT IMAGE | S208 RECONSTRUCT TARGET IMAGE FROM SIDE INFORMATION, GRADIENT IMAGE AND REMAINDER IMAGE |
| S110 AT LEAST OUTPUT REMAINDER IMAGE AND REFERENCE IMAGES | S210 OUTPUT RECONSTRUCTED TARGET IMAGE AND REFERENCE IMAGES |
| END | END |

EP 2 908 527 A1

**Description**

TECHNICAL FIELD

The present invention relates to a method, a program and an apparatus for reducing data size of a plurality of images containing mutually similar information.

BACKGROUND ART

Currently, research on various technologies for achieving ultra-realistic communication is being advanced. One of such technologies is a 3D display technology for providing high-definition 3D displays using multi-view images. Such 3D displays are achieved by parallax images obtained by capturing images of a subject from a large number of views (e.g., 200 views).

One of issues for putting such 3D displays into practical use resides in reduction of data size of multi-view images. Multi-view images contain information obtained by observing a subject from many views, resulting in increased data size. Various proposals have been made for such an issue.

For example, NPD 1 discloses a method called adaptive distributed coding of multi-view images. More specifically, this method is based on a modulo operator, and images obtained from respective views are encoded without exchanging mutual information, and in decoding, information exchange among the views is permitted. In other words, the method disclosed in above-described NPD 1 is mainly intended to be applied to distributed source coding, distributed video frames coding, and the like, linkage among views is not taken into consideration in an encoding process. This is because the method disclosed in NPD 1 is mainly directed to devices of low power consumption (e.g., mobile terminals, etc.) not having very high throughput.

According to the method disclosed in NPD 1, side information is utilized in an encoding process and a decoding process. As this side information, an encoder uses an original image, and a decoder uses a subsampled image or a virtual image, or a combination thereof.

CITATION LIST

NON PATENT DOCUMENT

NPD 1: Mehrdad Panahpour Tehrani, Toshiaki Fujii, Masayuki Tanimoto, "The Adaptive Distributed Source Coding of Multi-View Images in Camera Sensor Networks", IEICE Trans, E88-A (10), 2835-2843, (2005)
NPD 2: R. Szeliski, R. Zabih, D. Scharstein, O. Veksler, V. Kolmogorov, A. Agarwala, M. Tappen, C. Rother, "A comparative study of energy minimization methods for Markov random fields with smoothness-based priors," IEEE Trans. Pattern Anal. Machine Intell., 30(6), 1068-1080, (2008)
NPD 3: Y. Boykov, O. Veksler and R. Zabih, "Fast approximate energy minimization via graph cuts," IEEE Trans. Pattern Anal. Machine Intell., 23, 1222-1239, (Nov. 2001)
NPD 4: Y. Mori, N. Fukushima, T. Yendo, T. Fujii and M. Tanimoto, "View generation with 3D warping using depth information for FTV," Signal Process.: Image Commun., 24, 65-72, (Jan. 2009)
NPD 5: L. Yang, T. Yendo, M. Panahpour Tehrani, T. Fujii and M. Tanimoto, "Probabilistic reliability based view synthesis for FTV", in Proc. ICIP, 1785-1788, (Sep. 2010)
NPD 6: N. Fukushima, T. Fujii, Y. Ishibashi, T. Yendo and M. Tanimoto, "Real-time free viewpoint image rendering by using fast multi-pass dynamic programming," in Proc. 3DTV-CON, (June 2010)
NPD 7: A. Smolic, P. Kauff, S. Knorr, A. Hornung, M. Kunter, M. Muller, and M. Lang, "Three-Dimensional Video Postproduction and Processing", in Proc. IEEE, 99 (4), 607-625, (Apr. 2011)

SUMMARY OF INVENTION

TECHNICAL PROBLEM

The inventors of the present application have acquired new knowledge that by causing mutually similar images to exchange information, the image quality after decoding can be improved, and the application range can be widened. By the conventionally proposed methods, however, information exchange is not performed between mutually similar images in an encoder and a decoder. As a result, how to optimize processing and the like are completely unknown.

The present invention was made to solve problems as described above, and has an object to provide a method, a program and an apparatus for reducing data size of a plurality of images containing mutually similar information more efficiently.

SOLUTION TO PROBLEM

According to an aspect of the present invention, a method for reducing data size of a plurality of images containing mutually similar information is provided. The present method includes the steps of acquiring the plurality of images, and selecting, from among the plurality of images, a target image as well as a first reference image and a second reference image similar to the target image, generating a synthesized image corresponding to the target image based on the first reference image and the second reference image, generating side information which is information on a virtual view at a location of the target image, based on at least one of the target image and the synthesized image, generating a gradient image based on the side information, determining a factor in accordance with a gradient for each pixel location of the gradient image, and performing a modulo operation using, as a modulus, a factor corresponding to an intensity value at each pixel location of the target image, to generate a remainder image composed of remainders of respective pixel locations calculated by the modulo operation, and outputting the first reference image, the second reference image and the remainder image as information representing the target image, the first reference image and the second reference image.

Preferably, the step of generating side information includes a step of combining a subsampled image of the target image and the synthesized image to generate the side information.

More preferably, the step of generating side information includes steps of determining an error distribution based on a difference between an image obtained by upsampling the subsampled image and the synthesized image, and assigning information on the image obtained by upsampling the subsampled image to a region with a relatively large error, and assigning information on the synthesized image to a region with a relatively small error.

Alternatively, more preferably, the step of generating side information includes steps of determining an error distribution based on a difference between an image obtained by upsampling the subsampled image and the synthesized image, and assigning more information on the image obtained by upsampling the subsampled image to a region with a relatively large error, and assigning more information on the synthesized image to a region with a relatively small error.

Preferably, the step of generating a gradient image includes a step of generating an image in which a region in the side information with a larger textural change has a larger intensity.

Preferably, the step of generating a gradient image includes a step of generating a gradient image by each color component constituting the side information.

More preferably, the step of generating a gradient image includes a step of applying edge detection, smoothing, a series of morphological operations, and smoothing sequentially to a gray scale image of each color component constituting the side information.

Preferably, the step of generating a remainder image includes a step of selecting a factor corresponding to the gradient with reference to predetermined correspondence.

Preferably, in the step of generating a remainder image, a factor is determined for each pixel location of the gradient image by each color component.

Preferably, the step of selecting includes steps of selecting the target image as well as the first reference image and the second reference image based on a baseline distance when the plurality of images are multi-view images, and selecting the target image as well as the first reference image and the second reference image based on a frame rate when the plurality of images represent a sequence of video frames.

Preferably, the present method further includes the steps of acquiring the first reference image, the second reference image and the remainder image having been output, generating a synthesized image corresponding to the target image based on the first reference image and the second reference image, generating side information based on acquired information and generating a gradient image based on the side information, and determining a factor in accordance with the gradient for each pixel location of the gradient image, and among candidate values calculated by an inverse modulo operation using the determined factor as a modulus and a value at a corresponding pixel location of the remainder image as a remainder, determining one with the smallest difference from a value at a corresponding pixel location of the side information as an intensity value at a corresponding pixel location of the target image.

According to another aspect of the present invention, a program for reducing data size of a plurality of images containing mutually similar information is provided. The program causes a computer to execute the steps of acquiring the plurality of images, and selecting, from among the plurality of images, a target image as well as a first reference image and a second reference image similar to the target image, generating a synthesized image corresponding to the target image based on the first reference image and the second reference image, generating side information which is information on a virtual view at a location of the target image, based on at least one of the target image and the synthesized image, generating a gradient image based on the side information, determining a factor in accordance with a gradient for each pixel location of the gradient image, and performing a modulo operation using, as a modulus, a factor corresponding to an intensity value at each pixel location of the target image, to generate a remainder image composed of remainders of respective pixel locations calculated by the modulo operation, and outputting the first reference image, the second reference image and the remainder image as information representing the target image, the first reference image and the second reference image.

According to still another aspect of the present invention, an apparatus for reducing data size of a plurality of images containing mutually similar information is provided. The apparatus includes a means for acquiring the plurality of images, and selecting, from among the plurality of images, a target image as well as a first reference image and a second reference image similar to the target image, a means for generating a synthesized image corresponding to the target image based on the first reference image and the second reference image, a means for generating side information which is information on a virtual view at a location of the target image, based on at least one of the target image and the synthesized image, a means for generating a gradient image based on the side information, a means for determining a factor in accordance with a gradient for each pixel location of the gradient image and performing a modulo operation using, as a modulus, a factor corresponding to an intensity value at each pixel location of the target image, to generate a remainder image composed of remainders of respective pixel locations calculated by the modulo operation, and a means for outputting the first reference image, the second reference image and the remainder image as information representing the target image, the first reference image and the second reference image.

ADVANTAGEOUS EFFECTS OF INVENTION

According to the present invention, data size of a plurality of images containing mutually similar information can be reduced more efficiently.

BRIEF DESCRIPTION OF DRAWINGS

Fig. 1 is a diagram showing a 3D displays reproduction system 1 to which a data size reduction method according to an embodiment is applied.
Fig. 2 shows schematic views of an example of a plurality of images (multi-view images) containing mutually similar information according to the present embodiment.
Fig. 3 shows schematic views of an example of a plurality of images (a sequence of video frames) containing mutually similar information according to the present embodiment.
Fig. 4 is a schematic view showing a hardware configuration of an information processing apparatus functioning as an encoder shown in Fig. 1.
Fig. 5 is a schematic view showing a hardware configuration of an information processing apparatus functioning as a decoder shown in Fig. 1.
Fig. 6 is a flow chart showing an overall procedure of the data size reduction method according to the present embodiment.
Fig. 7 is a block diagram showing a functional configuration related to an encoding process by the data size reduction method according to the present embodiment.
Fig. 8 is a diagram showing a result of processing of generating a synthesized image according to the present embodiment.
Fig. 9 is a schematic view for illustrating processing of calculating error distribution used for selecting side information by the data size reduction method according to the present embodiment.
Fig. 10 shows diagrams of an example of a Lookup table used for generating a remainder image according to the present embodiment.
Fig. 11 is a diagram showing a result of processing of generating a remainder image according to the present embodiment.
Fig. 12 is a diagram showing a result of processing of generating a remainder image according to the present embodiment.
Fig. 13 shows an example of a target image input in a encoding process by the data size reduction method according to the present embodiment.
Fig. 14 shows an example of a remainder image generated from the target image shown in Fig. 13.
Fig. 15 is a block diagram showing a functional configuration related to the decoding process by the data size reduction method according to the present embodiment.
Fig. 16 is a schematic view for illustrating the overview of the decoding process by the data size reduction method according to the present embodiment.

## DESCRIPTION OF EMBODIMENTS

An embodiment of the present invention will be described in detail with reference to the drawings. It is noted that, in the drawings, the same or corresponding portions have the same reference characters allotted, and detailed description thereof will not be repeated.

[A. Application Example]

First, a typical application example will be described for easy understanding of a data size reduction method according to the present embodiment. It is noted that the application range of the data size reduction method according to the present embodiment is not limited to a structure which will be described below, but can be applied to any structure.

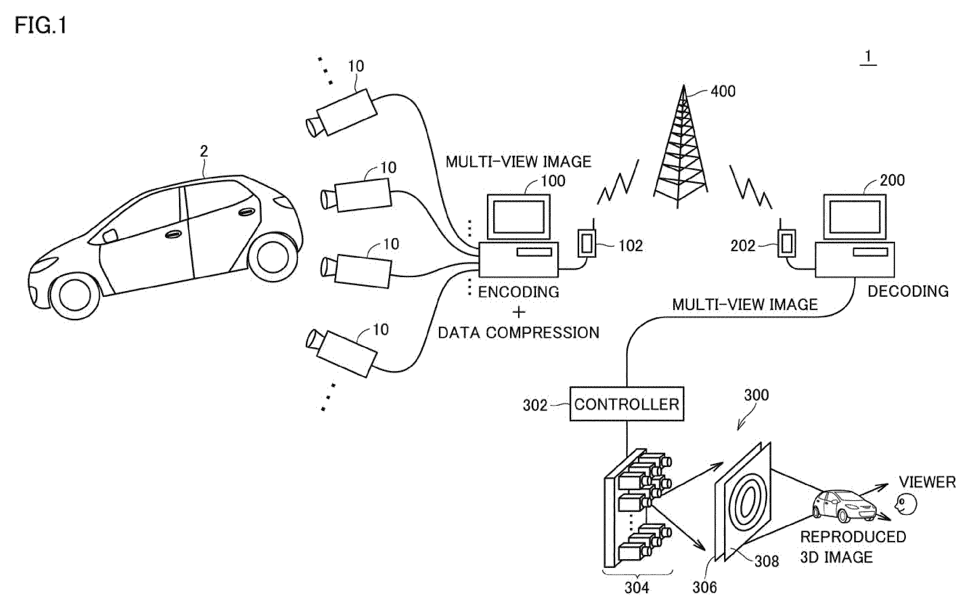

Fig. 1 is a diagram showing 3D displays reproduction system 1 to which the data size reduction method according to the present embodiment is applied. Referring to Fig. 1, in 3D displays reproduction system 1, images of a subject 2 are captured with a plurality of cameras 10 (camera array) from a plurality of views different from one another, thereby generating multi-view images, and 3D displays are displayed by a 3D display device 300 using these generated multi-view images.

More specifically, 3D displays reproduction system 1 includes an information processing apparatus 100 functioning as an encoder to which respective images (parallax images) are input from plurality of cameras 10, and an information processing apparatus 200 functioning as a decoder which decodes data transmitted from information processing apparatus 100 and outputs multi-view images to 3D display device 300. Information processing apparatus 100 performs a data compression process which will be described later along with an encoding process, thereby generating data suitable for storage and/or transmission. As an example, information processing apparatus 100 wirelessly transmits data (compressed data) containing information on the generated multi-view images using a wireless transmission device 102 connected thereto. This wirelessly transmitted data is received by a wireless transmission device 202 connected to information processing apparatus 200 through a wireless base station 400 and the like.

3D display device 300 includes a display screen mainly composed of a diffusion film 306 and a condenser lens 308, a projector array 304 which projects multi-view images on the display screen, and a controller 302 for controlling images to be projected by respective projectors of projector array 304. Controller 302 causes a corresponding projector to project each parallax image contained in multi-view images output from information processing apparatus 200.

With such an apparatus structure, a viewer who is in front of the display screen is provided with a reproduced 3D display of subject 2. At this time, a parallax image entering a viewer's view is intended to be changed depending on the relative positions of the display screen and the viewer, giving the viewer an experience as if he/she is in front of subject 2.

Such 3D displays reproduction system 1 is expected to be used for general applications in a movie theater, an amusement facility and the like, and to be used for industrial applications as a remote medical system, an industrial design system and an electronic advertisement system for public viewing or the like.

[B. Overview]

Considering multi-view images, moving pictures or the like generated by capturing images of subject 2 with the camera array as shown in Fig. 1, they may contain redundant information among images constituting them. By the data size reduction method according to the present embodiment, such redundant information is taken into consideration, and data with such redundant information removed therefrom is generated. That is, the data size reduction method according to the present embodiment is intended to reduce data size of a plurality of images containing mutually similar information.

The data size reduction method according to the present embodiment can be applied to multi-view data representation as described above, and can also be applied to distributed source coding. Alternatively, the data size reduction method according to the present embodiment can be applied to video frames representation, and can also be applied to distributed video frames coding. It is noted that the data size reduction method according to the present embodiment may be used alone or as part of pre-processing before data transmission.

Assuming multi-view images captured with the camera array as shown in Fig. 1, some of the images remain unchanged, while some other images are converted into remainder images which will be described later. In the case of using all the captured images, depth maps for images to remain unchanged are acquired (estimated).

The unchanged image and the depth map are used to synthesize (estimate) a virtual view at the location of an image to be converted into a remainder image. This depth map can also be utilized in a decoding process (a process of reconverting a converted image/ a process of returning a converted image to original image form). In the reconversion process, the depth map for an unchanged image may be reconstructed using that unchanged image.

In the present embodiment, side information which is information on a virtual view at the location of an image to be converted is used for generating a remainder image. When input images are multi-view images, a synthesized virtual image (virtual view) is used as side information. Alternatively, a virtual image may be synthesized using an unchanged image and a depth map, and this synthesized virtual image may be used as side information.

Furthermore, before conversion into a remainder image, a target image itself to be converted into a remainder image may be used as side information. In this case, a synthesized virtual image and/or a subsampled image of a target image will be used as side information because the target image cannot be used as it is in a decoding process.

On the other hand, if input images represent a sequence of video frames, a frame interpolated or extrapolated between frames can be used as side information.

When generating a remainder image from side information, a gradient image is generated. The value of each gradient is an integer value, and a modulo operation or an inverse modulo operation is executed using this integer value.

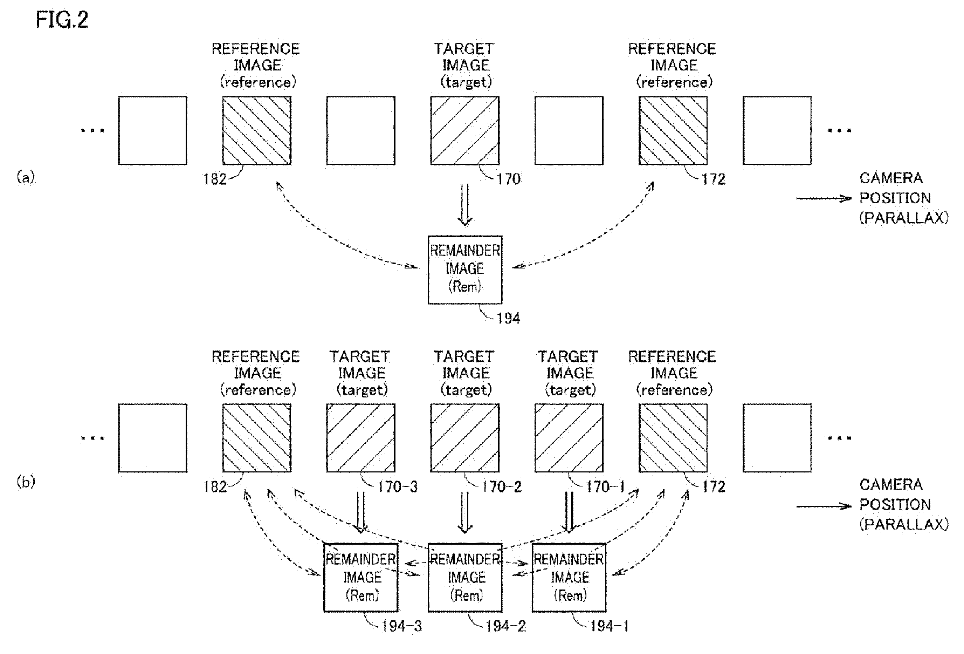

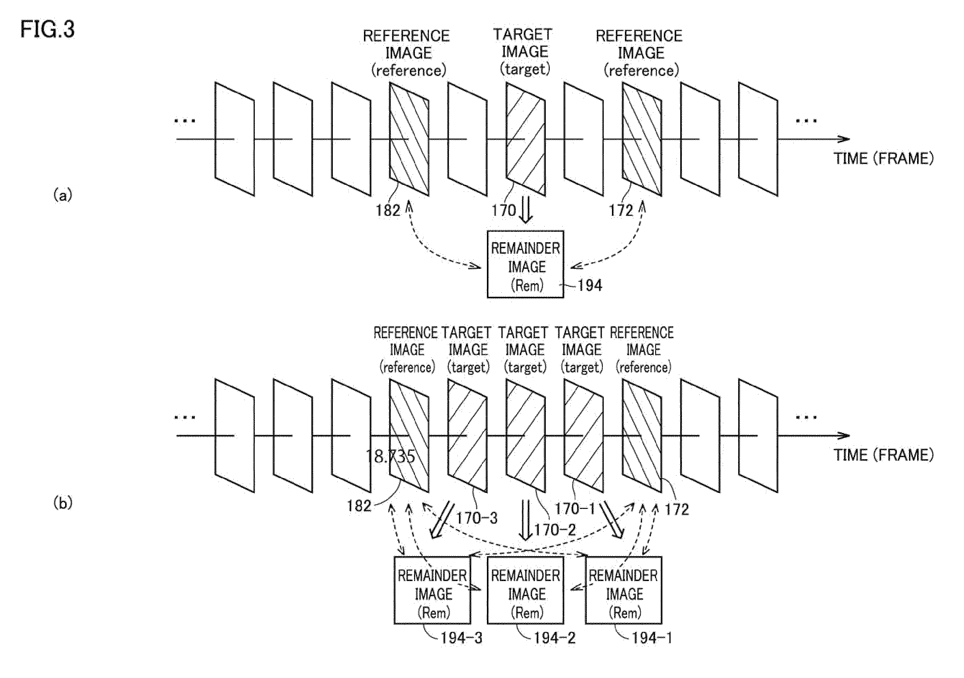

Figs. 2 and 3 are schematic views each showing an example of a plurality of images containing mutually similar information according to the present embodiment. Referring to Fig. 2(a), by capturing images of a subject using a plurality of cameras (camera array) arranged in proximity to one another as shown in Fig. 1, for example, a group of parallax images each having a parallax depending on the position of a corresponding camera is generated. Paying attention to a certain target image 170 in the group of parallax images, a view thereof in many cases at least partially overlaps views of other images captured with cameras at proximate camera positions (hereinafter also referred to as "reference image" or "reference images"). With such overlap among views, redundant information exists between target image 170 and reference images 172, 182. Conversely, under such circumstances, information contained in target image 170 can be reconstructed from information contained in reference images 172, 182 and some additional information.

By the data size reduction method according to the present embodiment, a remainder image 194 with which information on target image 170 can be reconstructed from information on proximate reference images 172 and 182 is generated, and this remainder image 194 is output instead of target image 170. Basically, remainder image 194 interpolates information, in information possessed by target image 170, that is lacking with information contained in reference images 172 and 182, and redundancy can be eliminated as compared with the case of outputting target image 170 as it is. Therefore, data size can be reduced as compared with the case of outputting target image 170 and reference images 172, 182 as they are.

As will be described later, target image 170 and reference images 172, 182 can be selected at any intervals as long as they contain mutually similar information. For example, as shown in Fig. 2(b), remainder images 194-1, 194-2 and 194-3 may be generated for target images 170-1, 170-2 and 170-3, respectively, with respect to identical reference images 172 and 182. That is, one or more target images can be converted into remainder images with respect to a pair of reference images.

As shown in Fig. 3(a), a similar logic can be applied to a sequence of video frames. That is, since a frame period of a normal moving picture is sufficiently short, if proximate frames are selected appropriately, information contained therein may partly overlap each other. Therefore, by assuming an image of a certain frame as target image 170 and generating remainder image 194 with reference to reference images 172 and 182 in proximate frames, data size can be reduced.

Target image 170 and reference images 172, 182 can also be selected at any frame intervals similarly for a sequence of video frames as long as they contain mutually similar information. For example, as shown in Fig. 3(b), remainder images 194-1, 194-2 and 194-3 may be generated for target images 170-1, 170-2 and 170-3, respectively, with respect to identical reference images 172 and 182. That is, one or more target images can be converted into remainder images with respect to a pair of reference images.

The data size reduction method according to the present embodiment may be used alone or as part of pre-processing before data transmission.

It is noted that "image capturing" in the present specification may include processing of arranging some object on a virtual space and rendering an image from a view optionally set for this arranged object (that is, virtual image capturing on a virtual space) as in computer graphics, for example, in addition to processing of acquiring an image of a subject with a real camera.

In the present embodiment, cameras can be optionally arranged in the camera array for capturing images of a subject. For example, any arrangement, such as one-dimensional arrangement (where cameras are arranged on a straight line), two-dimensional arrangement (where cameras are arranged in a matrix form), circular arrangement (where cameras are arranged entirely or partially on the circumference), spiral arrangement (where cameras are arranged spirally), and random arrangement (where cameras are arranged without any rule), can be adopted.

[C. Hardware Configuration]

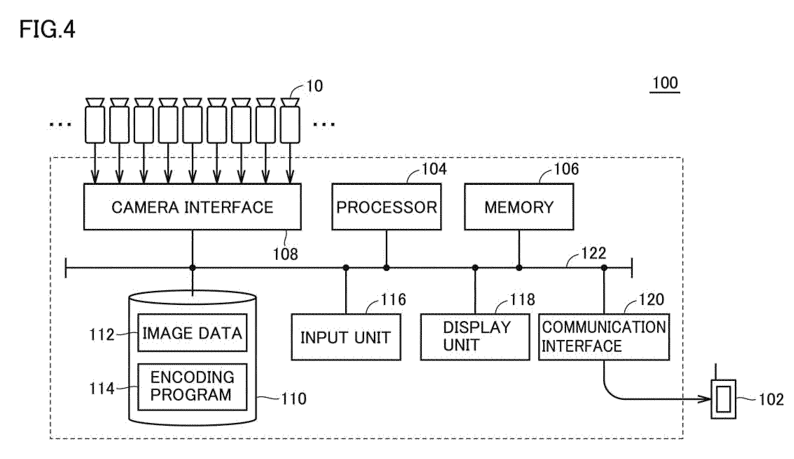

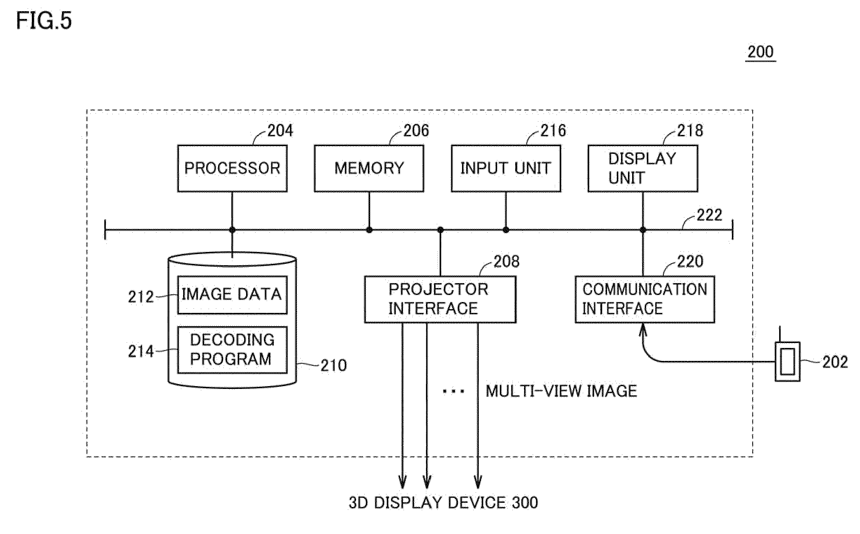

Next, an exemplary configuration of hardware for achieving the data size reduction method according to the present embodiment will be described. Fig. 4 is a schematic view showing a hardware configuration of information processing apparatus 100 functioning as an encoder shown in Fig. 1. Fig. 5 is a schematic view showing a hardware configuration of information processing apparatus 200 functioning as a decoder shown in Fig. 1.

Referring to Fig. 4, information processing apparatus 100 includes a processor 104, a memory 106, a camera interface 108, a hard disk 110, an input unit 116, a display unit 118, and a communication interface 120. These respective components are configured to be capable of making data communications with one another through a bus 122.

Processor 104 reads a program stored in hard disk 110 or the like, and expands the program in memory 106 for execution, thereby achieving the encoding process according to the present embodiment. Memory 106 functions as a working memory for processor 104 to execute processing.

Camera interface 108 is connected to plurality of cameras 10, and acquires images captured by respective cameras 10. The acquired images may be stored in hard disk 110 or memory 106. Hard disk 110 holds, in a nonvolatile manner, image data 112 containing the acquired images and an encoding program 114 for achieving the encoding process and data compression process. The encoding process which will be described later is achieved by processor 104 reading and executing encoding program 114.

Input unit 116 typically includes a mouse, a keyboard and the like to accept user operations. Display unit 118 informs a user of a result of processing and the like.

Communication interface 120 is connected to wireless transmission device 102 and the like, and outputs data output as a result of processing executed by processor 104, to wireless transmission device 102.

Referring to Fig. 5, information processing apparatus 200 includes a processor 204, a memory 206, a projector interface 208, a hard disk 210, an input unit 216, a display unit 218, and a communication interface 220. These respective components are configured to be capable of making data communications with one another through a bus 222.

Processor 204, memory 206, input unit 216, and display unit 218 are similar to processor 104, memory 106, input unit 116, and display unit 118 shown in Fig. 4, respectively, and therefore, a detailed description thereof will not be repeated.

Projector interface 208 is connected to 3D display device 300 to output multi-view images decoded by processor 204 to 3D display device 300.

Communication interface 220 is connected to wireless transmission device 202 and the like to receive image data transmitted from information processing apparatus 100 and output the image data to processor 204.

Hard disk 210 holds, in a nonvolatile manner, image data 212 containing decoded images and a decoding program 214 for achieving a decoding process. The decoding process which will be described later is achieved by processor 204 reading and executing decoding program 214.

The hardware itself and its operation principle of each of information processing apparatuses 100 and 200 shown in Figs. 4 and 5 are common. The essential part for achieving the encoding process/decoding process according to the present embodiment is software (instruction codes), such as encoding program 114 and decoding program 214 stored in storage media such as a hard disk, or the like. Encoding program 114 and/or decoding program 214 may be implemented such that processing is executed using modules offered by OS (Operating System). In this case, encoding program 114 and/or decoding program 214 will not include some modules. Such a case, however, is also included in the technical scope of the invention of the present application.

All or some of functions of information processing apparatus 100 and/or information processing apparatus 200 may be implemented by using a dedicated integrated circuit such as ASIC (Application Specific Integrated Circuit) or may be implemented by using programmable hardware such as FPGA (Field-Programmable Gate Array) or DSP (Digital Signal Processor).

In a data server for managing images, for example, a single information processing apparatus will execute the encoding process and decoding process, as will be described later.

[D. Overall Procedure]

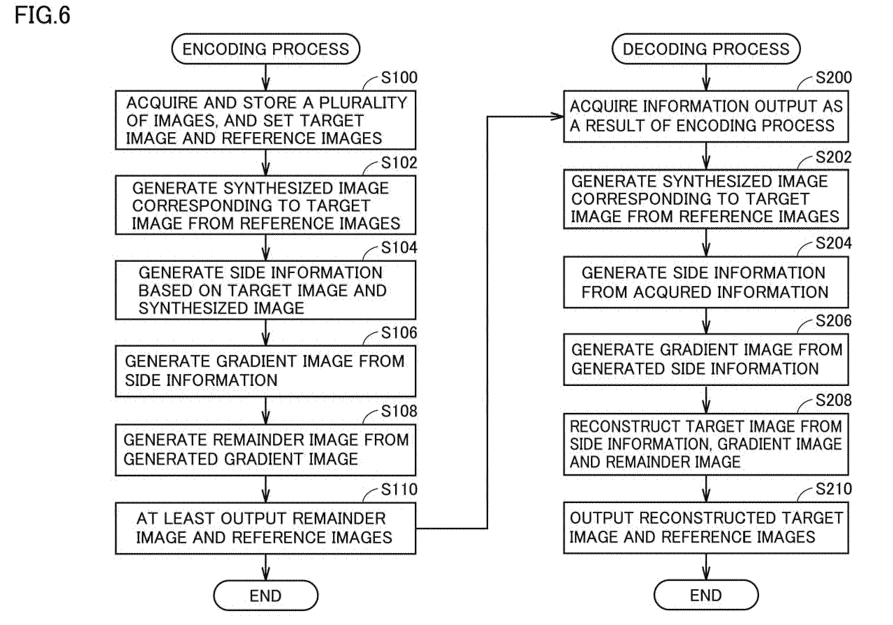

Next, an overall procedure of the data size reduction method according to the present embodiment will be described. Fig. 6 is a flow chart showing an overall procedure of the data size reduction method according to the present embodiment. The data size reduction method shown in Fig. 6 is mainly composed of an encoding process, but practically involves a decoding process for reconstructing original views from encoded data. In 3D displays reproduction system 1 as shown in Fig. 1, an encoding process and a decoding process are executed by different information processing apparatuses, respectively. On the other hand, in a server system for storing images, for example, a single information processing apparatus will execute an encoding process and a decoding process. That is, an encoding process is executed as pre-processing before data storage, and a decoding process is executed at the time of data reconstruction. In any case, processing in each step is typically achieved by the processor executing a program.

Referring to Fig. 6, processing in steps S100 to S 110 is executed as an encoding process. Specifically, processor 104 acquires a plurality of images containing mutually similar information and storing the acquired images in a predetermined storage area, and sets one of the acquired plurality of images as a target image and sets at least two images similar to the target image as reference images (step S100). That is, processor 104 acquires the plurality of images containing mutually similar information, and selects a target image and two reference images similar to the target image from among the plurality of images. Subsequently, processor 104 generates a synthesized image corresponding to the target image from the set two reference images (step S102).

Subsequently, processor 104 generates side information based on part or all of the target image and the synthesized image (step S104). That is, processor 104 generates side information which is information on a virtual view at the location of the target image based on at least one of the target image and the synthesized image. The side information contains information necessary for reconstructing the target image from the remainder image and the reference images.

Subsequently, processor 104 generates a gradient image from the generated side information (step S106). Then, processor 104 calculates a remainder image of the target image from the generated gradient image (step S108).

Finally, processor 104 at least outputs the remainder image and the reference images as information corresponding to the target image and the reference images (step S110). That is, processor 104 outputs the two reference images and the remainder image as information representing the target image and the two reference images.

As a decoding process, processing in steps S200 to S210 is executed. Specifically, processor 204 acquires information output as a result of the encoding process (step S200). That is, processor 204 at least acquires the two reference images and the remainder image having been output.

Subsequently, processor 204 generates a synthesized image corresponding to the target image from the reference images contained in the acquired information (step S202).

Subsequently, processor 204 generates side information from the acquired information (step S204). Then, processor 204 generates a gradient image from the generated side information (step S206).

Then, processor 204 reconstructs the target image from the side information, the gradient image and the remainder image (step S208). Finally, processor 204 outputs the reconstructed target image and the reference images (step S210).

[E. Encoding Process]

Next, the encoding process (steps S100 to S110 in Fig. 6) by the data size reduction method according to the present embodiment will be described in detail.

(e1: Functional Configuration)

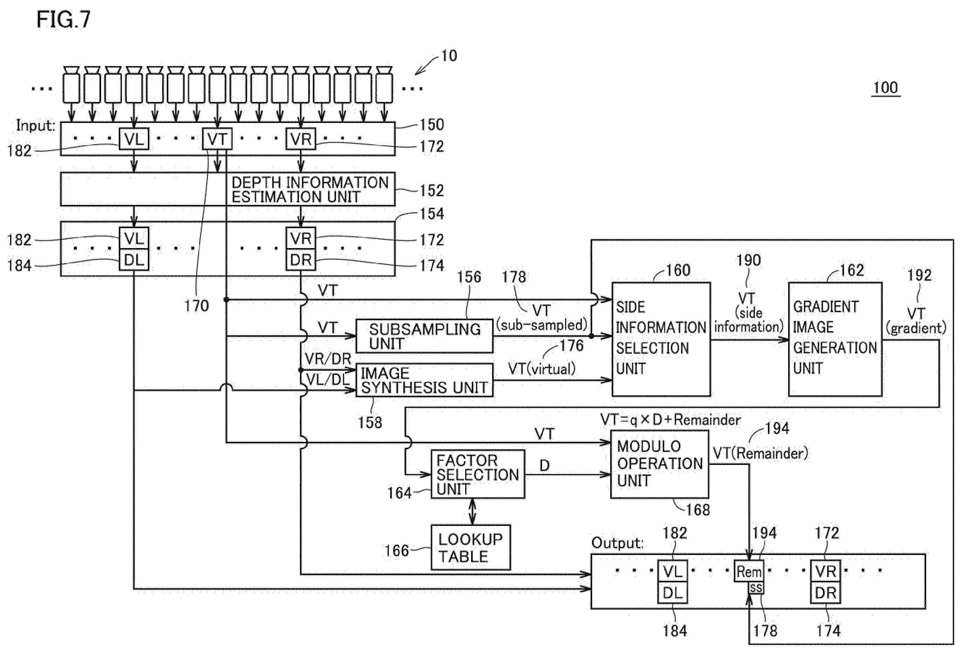

Fig. 7 is a block diagram showing a functional configuration related to the encoding process by the data size reduction method according to the present embodiment. Referring to Fig. 7, information processing apparatus 100 includes, as its functional configuration, an input image buffer 150, a depth information estimation unit 152, a depth information buffer 154, a subsampling unit 156, an image synthesis unit 158, a side information selection unit 160, a gradient image generation unit 162, a factor selection unit 164, a Lookup table 166, and a modulo operation unit 168.

(e2: Acquisition of Input Image and Depth Map)

Image acquisition processing shown in step S100 of Fig. 6 is implemented by input image buffer 150, depth information estimation unit 152 and depth information buffer 154 shown in Fig. 7. Specifically, information processing apparatus 100 receives multi-view images composed of a plurality of parallax images captured with plurality of cameras 10 (camera array), and stores them in input image buffer 150. Alternatively, information processing apparatus 100 may receive a sequential video composed of images arranged in the order of frames for storage in input image buffer 150. These input images will be subjected to processing. Although the description herein is given paying attention to the set of single target image 170 and two reference images 172, 182 for ease of description, the data size reduction method according to the present embodiment may be applied to any number of sets depending on the reduction rate of data size as required, throughput of information processing apparatus 100 or the like.

Target image 170 and reference images 172, 182 must contain mutually similar information. Therefore, in the case of multi-view images, target image 170 and reference images 172, 182 are preferably selected based on their baseline distance. That is, target image 170 and reference images 172, 182 are selected in accordance with parallaxes produced therebetween. In the case of a sequence of video frames (moving picture), frames to be a target are selected based on the frame rate. That is, the processing in step S100 of Fig. 6 includes processing of selecting target image 170 and reference images 172, 182 based on the baseline distance in the case where the plurality of images are multi-view images (see Fig. 2) and processing of selecting target image 170 and reference images 172, 182 based on the frame rate in the case where the plurality of images represent a sequence of video frames (see Fig. 3).

In Fig. 7, target image 170 is denoted as "VT" referring to a target view represented by target image 170 (target view for representation). Reference image 172 located at the right side of target image 170 is denoted as "VR" referring to an original view at the right side of target image 170 (original view at the right side of VT). Reference image 182 located at the left side of target image 170 is denoted as "VL" referring to an original view at the left side of target image 170 (original view at the left side of VT). It is noted that the expressions of the right side and the left side are used for the sake of description, and may not always conform to those in a real camera arrangement.

By the data size reduction method according to the present embodiment, a synthesized image 176 corresponding to the target image may be generated using depth maps of reference images 172 and 182, as will be described later. Therefore, a depth map 174 of reference image 172 and a depth map 184 of reference image 182 are acquired using any method.

For example, in the case of using a camera array as shown in Fig. 1, it may be possible to acquire depth maps simultaneously with acquisition of an image representing a subject. Considering the processing of reconstructing target image 170 in an encoding process, it is preferable that a view is unchanged between a reference image and a corresponding depth map. Therefore, it is preferable to acquire each depth map using such a camera array, if possible. In this case, a reference image and a corresponding depth map are simultaneously input to the information processing apparatus. Therefore, if a depth map corresponding to a reference image can be acquired, it is not always necessary to mount depth information estimation unit 152 shown in Fig. 7.

In Fig. 7, depth map 174 corresponding to reference image 172 is denoted as "DR" referring to a depth map at that location (depth map at the location of VR). Depth map 184 corresponding to reference image 182 is denoted as "DL" referring to a depth map at that location (depth map at the location of VL).

In the case where the input plurality of images are multi-view images, and when a depth map for a view cannot be used or when a distance camera cannot be used, depth information estimation unit 152 generates depth maps 174 and 184 corresponding to reference images 172 and 182, respectively. As a method for estimating a depth map by depth information estimation unit 152, various methods based on stereo matching with which energy optimization as disclosed in NPD 2 is used together can be adopted. For example, optimization can be done using graph cuts as disclosed in NPD 3.

Depth maps 174 and 184 generated by depth information estimation unit 152 are stored in depth information buffer 154.

It is noted that when the input plurality of images represent a sequence of video frames (moving picture), it is not always necessary to acquire depth maps.

The following description will mainly illustrate a case where one set of input data contains target image 170, reference image 172 and corresponding depth map 174 as well as reference image 182 and corresponding depth map 184, as a typical example.

(e3: Generation of Synthesized Image)

The processing of generating a synthesized image shown in step S102 of Fig. 6 is implemented by image synthesis unit 158 shown in Fig. 7. More specifically, image synthesis unit 158 generates synthesized image 176 indicating a virtual view at the location of target image 170 using reference image 172 and corresponding depth map 174 as well as reference image 182 and corresponding depth map 184. In Fig. 7, this synthesized image 176 is denoted as "VT (virtual)" referring to a virtual view of a target view. For such image synthesis, methods as disclosed in NPD 4 and NPD 5 can be adopted, for example. In the case where the accuracy of a depth map is low, synthesized image 176 can be generated by using interpolation processing as disclosed in NPD 6 and NPD 7.

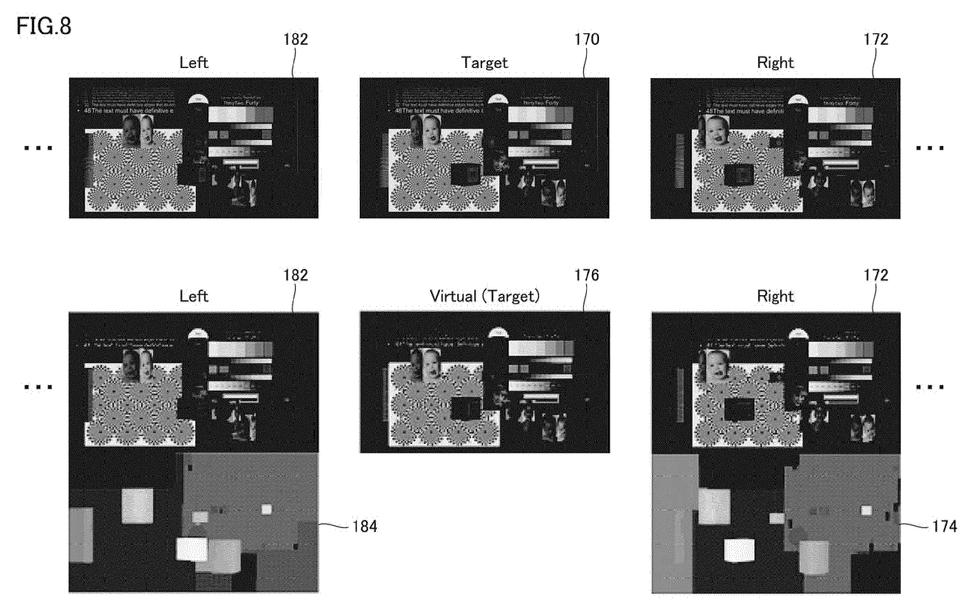

Fig. 8 is a diagram showing a result of processing of generating a synthesized image according to the present embodiment. As shown in Fig. 8, synthesized image 176 corresponding to target image 170 is generated from reference image 172 and corresponding depth map 174 as well as reference image 182 and corresponding depth map 184.

When the input plurality of images represent a sequence of video frames (moving picture), interpolation processing or extrapolation processing is performed based on information on frames corresponding to two reference images 172 and 182, thereby generating information on a frame corresponding to target image 170, which can be used as synthesized image 176.

(e4: Generation of Side Information)

The processing of generating side information shown in step S104 of Fig. 6 is implemented by subsampling unit 156 and side information selection unit 160 shown in Fig. 7. As described above, side information 190 is information on a virtual view at the location of target image 170, and is generated using target image 170, a subsampled image of target image 170, synthesized image 176, an image obtained by combining the subsampled image of target image 170 and synthesized image 176, and the like. Side information selection unit 160 appropriately selects input information (image), and outputs side information 190. In Fig. 7, side information 190 is denoted as "VT (side information)".

Subsampling unit 156 generates a subsampled image 178 from target image 170. In Fig. 7, this subsampled image 178 is denoted as "VT (sub-sampled)" which means that it has been obtained by subsampling target image 170.

Any method can be adopted for the processing of generating subsampled image 178 in subsampling unit 156. For example, pixel information can be extracted from target image 170 at every predetermined interval for output as subsampled image 178.

Alternatively, subsampled image 178 may be generated through any filtering process (e.g., nearest neighbor method, interpolation, bicubic interpolation, or bilateral filter). For example, subsampled image 178 of any size can be generated by dividing target image 170 into regions of predetermined size (e.g., 2x2 pixels, 3x3 pixels, etc.), and in each region, performing linear or non-linear interpolation processing on information on a plurality of pixels contained in that region.

Typically, a method for generating side information 190 can be selected optionally from among the following four methods (a) to (d).

(a) In the case where target image 170 itself is used as side information 190:

Side information selection unit 160 directly outputs input target image 170 as side information 190. Since target image 170 cannot be used as it is in a decoding process, a synthesized image generated based on reference images is used as side information.

(b) In the case where subsampled image 178 of target image 170 is used as side information 190:

Side information selection unit 160 directly outputs subsampled image 178 generated by subsampling unit 156.

(c) In the case where synthesized image 176 is used as side information 190:

Side information selection unit 160 directly outputs synthesized image 176 generated by image synthesis unit 158.

(d) In the case where the combination of subsampled image 178 and synthesized image 176 is used as side information 190:

Side information selection unit 160 generates side information 190 in accordance with a method which will be described later. That is, the processing of generating side information shown in step S104 of Fig. 6 includes processing of combining subsampled image 178 of target image 170 and synthesized image 176 to generate side information 190.

More specifically, side information selection unit 160 first calculates a weighting factor used for combination. This weighting factor is associated with a reliability distribution of synthesized image 176 with respect to subsampled image 178 of target image 170. That is, the weighting factor is determined based on an error between synthesized image 176 and subsampled image 178 (target image 170) (or the degree of matching therebetween). The calculated error distribution is equivalent to the inverse of the reliability distribution. It can be considered that, as the error is smaller, the reliability is higher. That is, the region with a larger error is considered that the reliability of synthesized image 176 is lower. Thus, more information on subsampled image 178 (target image 170) is assigned to such a region. On the other hand, the region with a smaller error is considered that the reliability of synthesized image 176 is higher. Thus, more information on synthesized image 176 having lower redundancy is assigned.

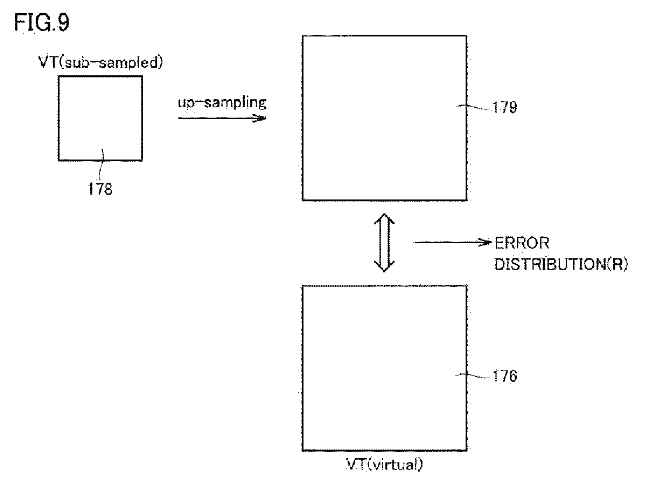

Fig. 9 is a schematic view for illustrating processing of calculating the error distribution used for selecting side information by the data size reduction method according to the present embodiment. Referring to Fig. 9, side information selection unit 160 obtains the difference in absolute value of intensity value between corresponding pixels of an upsampled image 179 having been obtained by upsampling subsampled image 178 (VT (sub-sampled)) of target image 170 and synthesized image 176 (VT (virtual)), thereby determining an error distribution R. The reason for upsampling subsampled image 178 is to match the size with synthesized image 176, and to calculate an error assuming processing in the processing of reconstructing target image 170.

In this way, when the scheme (d) is selected, side information selection unit 160 determines the error distribution based on the difference between upsampled image 179 having been obtained by upsampling subsampled image 178 and synthesized image 176. Side information selection unit 160 combines subsampled image 178 (or upsampled image 179) and synthesized image 176 based on determined error distribution R, to generate side information 190. Although various methods can be considered as a method for generating side information 190 using calculated error distribution R, the following processing examples can be adopted, for example.

(i) Processing example 1: Binary weighted combination

In this processing example, calculated error distribution R is divided into two regions using any threshold value. Typically, a region where the error is higher than the threshold value is called a Hi region, and a region where the error is smaller than the threshold value is called a Lo region. Then, information on subsampled image 178 (substantially, upsampled image 179) or synthesized image 176 is assigned to each pixel of side information 190 in correspondence with the Hi region and the Lo region of error distribution R. More specifically, the value at a pixel location of upsampled image 179 having been obtained by upsampling subsampled image 178 is assigned to a corresponding pixel location of side information 190 corresponding to the Hi region of error distribution R, and the value at a pixel location of synthesized image 176 is assigned to a corresponding pixel location corresponding to the Lo region of error distribution R.

That is, if upsampled image 179 (image obtained by upsampling subsampled image 178) is denoted as SS and synthesized image 176 is denoted as SY, the value at a pixel location (x, y) of side information 190 (denoted as "SI") is expressed as follows using a predetermined threshold value TH.

$$SI(x, y) = SS(x, y) \ \{if \ R(x, y) \geq TH\}$$
$$= SY(x, y) \ \{if \ R(x, y) < TH\}$$

In this way, in this processing example, side information selection unit 160 assigns information on upsampled image 179 having been obtained by upsampling subsampled image 178 to a region with a relatively large error, and assigns information on synthesized image 176 to a region with a relatively small error.

(ii) Processing example 2: Discrete weighted combination

In this processing example, calculated error distribution R is divided into n types of regions using (n-1) threshold values. Assuming the number k of the divided regions as 1, 2, ..., and n in the order that the error increases, the value at the pixel location (x, y) of side information 190 (SI) is expressed as follows using the number k of the divided regions.

$$SI(x, y) = (k/n) \times SY(x, y) + (1-k/n) \times SS(x, y)$$

In this way, in this processing example, side information selection unit 160 assigns information on upsampled image 179 having been obtained by upsampling subsampled image 178 to a region with a relatively large error, and assigns information on synthesized image 176 to a region with a relatively small error.

(iii) Processing example 3: Continuous weighted combination

In this processing example, an inverse value of the error at a pixel location is considered as a weighting factor, and side information 190 is calculated using this. Specifically, a value SI(x, y) at the pixel location (x, y) of side information 190 is expressed as follows.

$$SI(x, y) = (1/R(x, y)) \times SY(x, y) + (1-1/R(x, y)) \times SS(x, y)$$

In this way, in this processing example, side information selection unit 160 assigns information on upsampled image 179 having been obtained by upsampling subsampled image 178 to a region with a relatively large error, and assigns information on synthesized image 176 to a region with a relatively small error. In this processing example, upsampled image 179 (subsampled image 178) is dominant as the error is larger, and synthesized image 176 is dominant as the error is smaller.

(e5: Generation of Gradient Image)

The processing of generating a gradient image shown in step S106 of Fig. 6 is implemented by gradient image generation unit 162 shown in Fig. 7. More specifically, gradient image generation unit 162 generates a gradient image 192 indicating a change on an image space, from side information 190. Gradient image 192 refers to an image in which a region in side information 190 with a larger textural change has a larger intensity. In Fig. 7, gradient image 192 is denoted as "VT (gradient)." Any filtering process can be used as the processing of generating gradient image 192. The value at each pixel of gradient image 192 is normalized so as to have any integer value within a predetermined range (e.g., 0 to 255).

Typically, gradient image 192 is generated by the following procedure.

(a) Resize side information 190 to an image size of a remainder image to be output.
(b) Apply Gaussian filtering to the resized side information to remove noise (Gaussian smoothing).
(c) Split the filtered side information to color components (i.e., a gray scale image is generated for each color component).
(d) Execute operations of (d1) to (d4) for the gray scale image of each color component.
(d1) Edge detection
(d2) Gaussian smoothing (once or more) (or Median filter)
(d3) a series of morphological operations (e.g., dilation (once or more), erosion (once or more), dilation (once or more))
(d4) Gaussian smoothing (once or more)

Through the operations as described above, a gradient image is generated for each color component constituting side information 190. That is, the processing of generating gradient image 192 shown in S 106 of Fig. 6 includes processing of applying edge detection, smoothing, a series of morphological operations, and smoothing in the order presented to a gray scale image of each color component constituting side information 190. Through such processing, gray scale images are generated by the number of color components contained in side information 190, and a gradient image is generated for each of the gray scale images.

The procedure described herein is merely an example, and the details of processing, procedure and the like of Gaussian smoothing and morphological operations can be designed appropriately.

Furthermore, processing of generating a pseudo gradient image may be adopted. That is, any filtering process may be adopted as long as an image in which a region with a larger textural change in side information 190 has a larger intensity can be generated.

(e6: Generation of Remainder Image)

The processing of generating a remainder image shown in step S108 of Fig. 6 is implemented by factor selection unit 164, Lookup table 166 and modulo operation unit 168 shown in Fig. 7. Remainder image 194 indicates a remainder obtained by performing a modulo operation on the value at each pixel location of gradient image 192. For this modulo operation, a factor D to be used as a modulus is selected in accordance with the value at each pixel location of gradient image 192. Factor selection unit 164 selects factor D in accordance with the value at each pixel location of gradient image 192.

In this way, the processing of generating a remainder image shown in step S108 of Fig. 6 includes processing of determining factor D in accordance with the gradient for each pixel location of gradient image 192, and performing a modulo operation using, as a modulus, factor D corresponding to the intensity value at each pixel location of target image 170, thereby generating remainder image 194 composed of remainders of the respective pixel locations calculated by the modulo operation.

As a method for selecting factor D, any method can be adopted. For example, the value of gradient image 192 itself may be selected as factor D. However, in order to improve the image quality after decoding, factor D is determined nonlinearly with respect to gradient image 192 in the present embodiment. Specifically, with reference to Lookup table 166, factor D corresponding to each pixel location of gradient image 192 is selected. Here, factor D is determined for each pixel location of each color component contained in gradient image 192.

In this way, the processing of generating a remainder image shown in step S108 of Fig. 6 includes processing of selecting factor D corresponding to the gradient with reference to predetermined correspondence. At this time, factor D is determined for each pixel location of gradient image 192 by each color component.

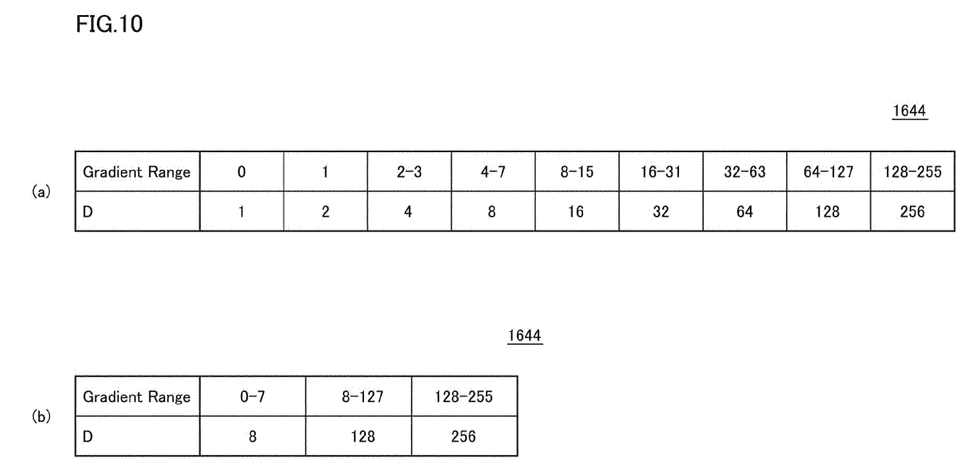

Fig. 10 is a diagram showing an example of Lookup table 166 used for generating a remainder image according to the present embodiment. As shown in Fig. 10(a), discretization into a plurality of levels is carried out, and factor D corresponding to the value at each pixel location of gradient image 192 is selected. In Lookup table 166 shown in Fig. 10(a), a value to be used as the modulus in the modulo operation is designed to be a power of two. By assigning factor D in this way, the modulo operation can be accelerated. Lookup table 166 can be designed optionally. For example, lookup table 166 with a smaller number of levels as shown in Fig. 10(b) may be adopted. Furthermore, it is not always necessary to use a Lookup table, but factor D may be determined using a predetermined function or the like.

Returning to Fig. 7, factor selection unit 164 selects factor D for each pixel location of gradient image 192 by each color component. Modulo operation unit 168 performs a modulo operation on target image 170 using factor D determined in accordance with gradient image 192, thereby generating remainder image 194.

Modulo operation unit 168 performs a modulo operation on the intensity value at each pixel location using corresponding factor D as a modulus. More specifically, a minimum m with which the intensity value P = q×D+m (q≥0, D>0) at each pixel location holds is determined. Herein, q is a quotient, and m is a remainder.

Since "intensity value P = k×D+m" is calculated in processing of reconstructing target image 170 (decoding process) which will be described later, remainder m calculated at each pixel location by each color component is stored as remainder image 194. That is, remainder m at each pixel location constitutes remainder image 194. In Fig. 7, remainder image 194 is denoted as "VT (remainder)" or "Rem."

Remainder image 194 may be resized to any size using a well-known downsampling method or upsampling method.

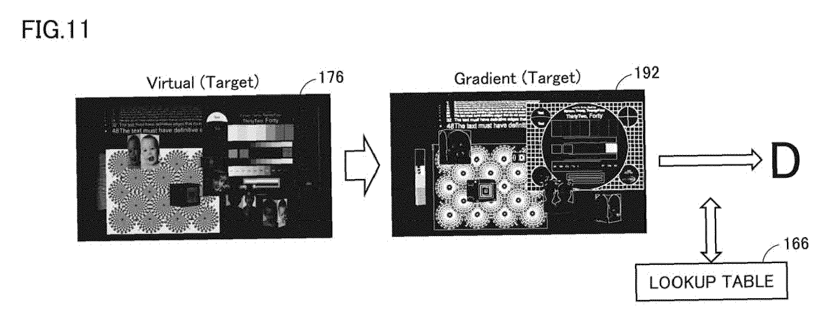

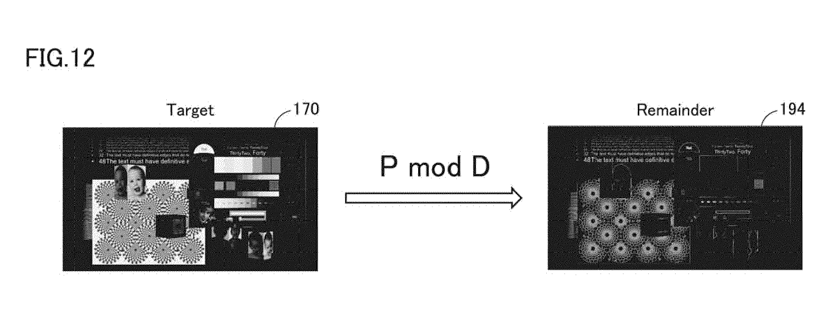

Figs. 11 and 12 are diagrams each showing a result of processing of generating the remainder image according to the present embodiment. Fig. 11 shows an example of generation of gradient image 192 from synthesized image 176. Based on this gradient image 192, factor D for each pixel location is selected by each color component with reference to Lookup table 166. Then, as shown in Fig. 12, a modulo operation using the selected factor as a modulus is executed on target image 170. Remainder image 194 is thereby generated.

As a final output of the encoding process by the data size reduction method according to the present embodiment, at least reference images 172 and 182 as input and remainder image 194 as a processing result are stored. As an option, depth map 174 of reference image 172 and depth map 184 of reference image 182 may be output. As another option, subsampled image 178 may be output together with remainder image 194. These pieces of information (images) added as options are suitably selected in accordance with the details of processing in the decoding process.

The above-described description has been given paying attention to the set of one target image 170 and two reference images 172, 182. Similar processing is executed on all of target images and respectively corresponding reference images set for a plurality of input images (multi-view images or a sequence of video frames).

(e7: Processing Example)

A processing example of an encoding process by the data size reduction method according to the present embodiment will now be described.

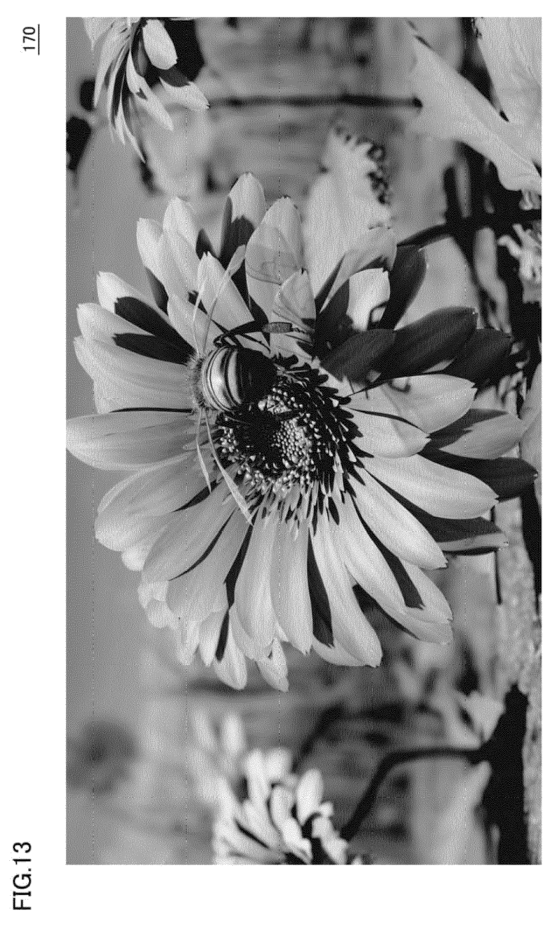

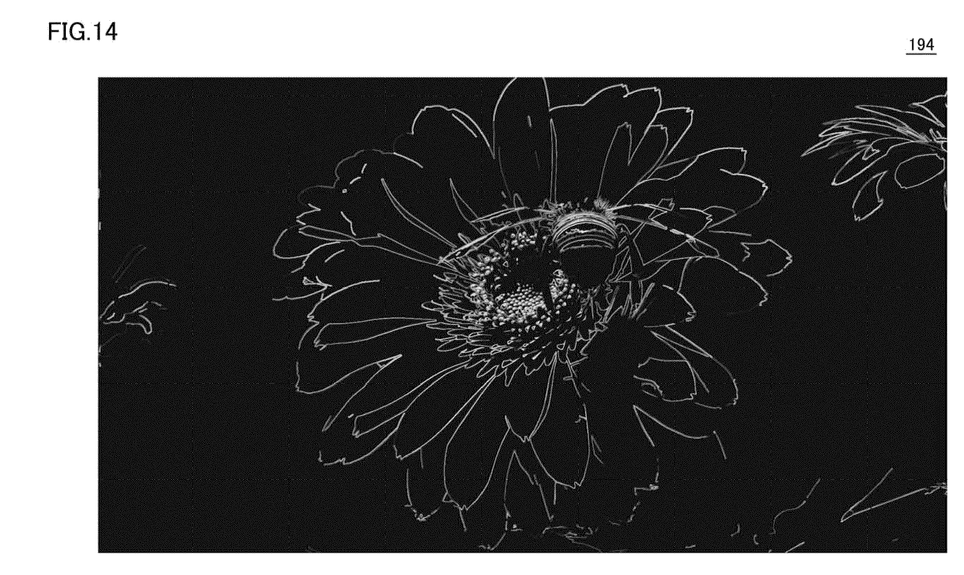

Fig. 13 shows an example of target image 170 input in an encoding process by the data size reduction method according to the present embodiment. Fig. 14 shows an example of remainder image 194 generated from target image 170 shown in Fig. 13. It is understood that even in the case of high-definition target image 170 as shown in Fig. 13, many portions of remainder image 194 are black, and reduced data size is achieved, as shown in Fig. 14.

[F. Decoding Process]

Next, the details of a decoding process (steps S200 to S210 of Fig. 6) by the data size reduction method according to the present embodiment will be described. Since it is basically inverse processing of the encoding process, the detailed description of similar processing will not be repeated.

(f1: Functional Configuration)

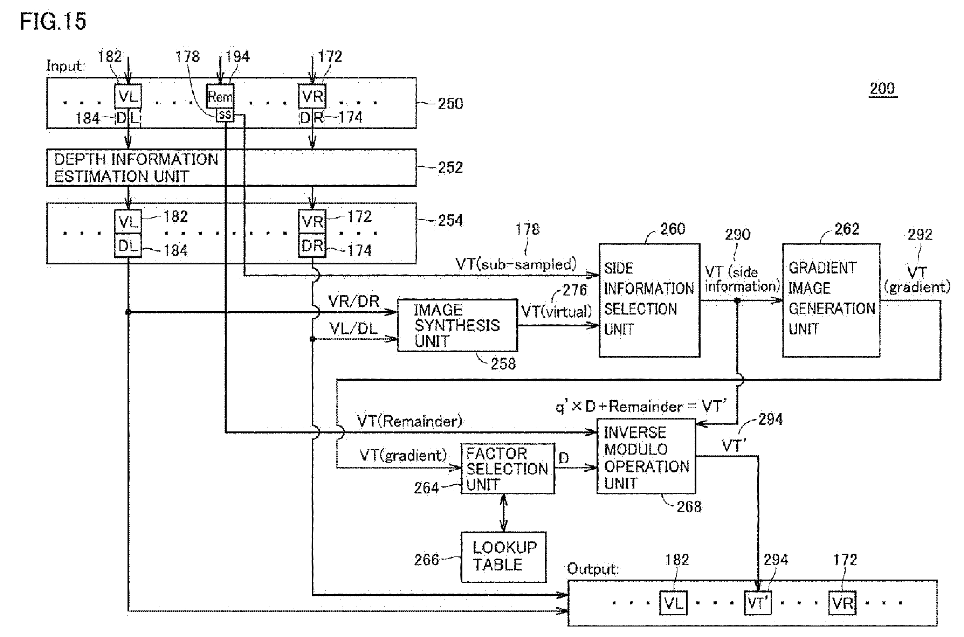

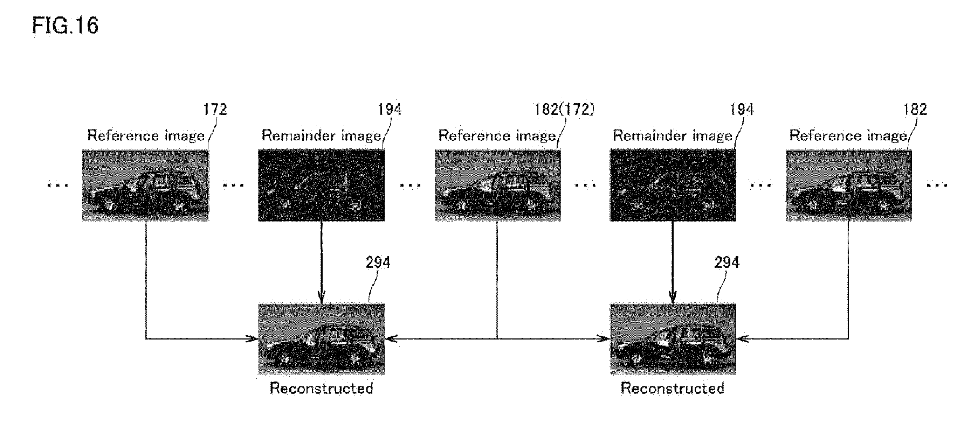

Fig. 15 is a block diagram showing a functional configuration related to the decoding process by the data size reduction method according to the present embodiment. Fig. 16 is a schematic view for illustrating the overview of the decoding process by the data size reduction method according to the present embodiment. The notation in Fig. 15 is in accordance with the notation in Fig. 7.

Referring to Fig. 15, information processing apparatus 200 includes, as its functional configuration, an input data buffer 250, a depth information estimation unit 252, a depth information buffer 254, an image synthesis unit 258, a side information selection unit 260, a gradient image generation unit 262, a factor selection unit 264, a Lookup table 266, and an inverse modulo operation unit 268.

Information processing apparatus 200 reconstructs original target image 170 using encoded information (reference images 172, 182 and remainder image 194). For example, as shown in Fig. 16, reference images 172, 182 and remainder image 194 are arranged alternately, and information processing apparatus 200 performs a decoding process for each remainder image 194 using corresponding reference images 172 and 182, thereby inverting a reconstructed image 294 corresponding to the original target image. As shown in Fig. 16, a single reference image may be associated with a plurality of target images.

(f2: Acquisition of Input Data and Depth Map)

The acquisition processing in the encoding process shown in step S200 of Fig. 6 is implemented by input data buffer 250, depth information estimation unit 252 and depth information buffer 254 shown in Fig. 15. Specifically, information processing apparatus 200 at least receives reference images 172, 182 and remainder image 194 generated by the above-described decoding process. As described above, if depth maps 174 and 184 corresponding to reference images 172 and 182, respectively, are transmitted altogether, these depth maps are also used for the decoding process.

On the other hand, if depth maps 174 and 184 are not input, depth information estimation unit 252 generates depth maps 174 and 184 corresponding to reference images 172 and 182, respectively. Since the method for estimating depth maps in depth information estimation unit 252 is similar to the above-described method for estimating depth maps in depth information estimation unit 152 (Fig. 7), a detailed description thereof will not be repeated. Depth maps 174 and 184 generated by depth information estimation unit 252 are stored in depth information buffer 254.

(f3: Generation of Synthesized Image)

The processing of generating a synthesized image shown in step S202 of Fig. 6 is implemented by image synthesis unit 258 shown in Fig. 15. More specifically, image synthesis unit 258 generates a synthesized image 276 indicating a virtual view at the location of target image 170 using reference image 172 and corresponding depth map 174 as well as reference image 182 and corresponding depth map 184. Since the method for generating a synthesized image in image synthesis unit 258 is similar to the above-described method for generating a synthesized image in image synthesis unit 158 (Fig. 7), a detailed description thereof will not be repeated. It is noted that when a plurality of received images represent a sequence of video frames (moving picture), information on a frame corresponding to target image 170 can be generated by performing interpolation processing or extrapolation processing based on information

on frames corresponding to two reference images 172 and 182.

(f4: Generation of Side Information)

The processing of generating side information shown in step S204 of Fig. 6 is implemented by side information selection unit 260 shown in Fig. 15. More specifically, side information selection unit 260 generates side information 290 based on subsampled image 178 (if contained in input data), synthesized image 276 and a combination thereof.

As described above, subsampled image 178 may not be contained in input data. In this case, side information selection unit 160 generates side information 290 based on synthesized image 276 generated by image synthesis unit 258.

On the other hand, if subsampled image 178 is contained in input data, side information selection unit 160 may use subsampled image 178 as side information 290, or may generate side information 290 by the combination of subsampled image 178 and synthesized image 276. For such processing of generating side information by the combination of subsampled image 178 and synthesized image 276, binary weighted combination, discrete weighted combination, continuous weighted combination, or the like can be adopted using the error distribution as described above. Since these processes have been described above, a detailed description thereof will not be repeated.

(f5: Generation of Gradient Image)

The processing of generating a gradient image shown in step S206 of Fig. 6 is implemented by gradient image generation unit 262 shown in Fig. 15. More specifically, gradient image generation unit 262 generates a gradient image 292 indicating a change on an image space, from side information 290. Since the method for generating a gradient image in gradient image generation unit 262 is similar to the above-described method for generating a gradient image in gradient image generation unit 162 (Fig. 7), a detailed description thereof will not be repeated.

(f6: Reconstruction of Target Image)

The processing of reconstructing a target image shown in step S208 of Fig. 6 is implemented by factor selection unit 264, Lookup table 266 and inverse modulo operation unit 268 shown in Fig. 15. The intensity value at each pixel location of the target image is estimated by an inverse modulo operation from the value (remainder m) at a corresponding pixel location of remainder image 194 included in input data and factor D used when generating remainder image 194.

In this inverse modulo operation, factor D used when generating remainder image 194 in the encoding process is estimated (selected) based on gradient image 292. That is, factor selection unit 264 selects factor D in accordance with the value at each pixel location of gradient image 292. Although any method can be adopted as a method for selecting this factor D, factor D at each pixel location is selected with reference to Lookup table 266 in the present embodiment. Lookup table 266 is similar to Lookup table 166 (Fig. 10) used in the encoding process. Factor selection unit 264 selects factor D for each pixel location of gradient image 292 by each color component, with reference to Lookup table 266.

Inverse modulo operation unit 268 performs an inverse modulo operation using selected factor D and remainder m for each pixel location, as well as corresponding value SI of side information 290. More specifically, inverse modulo operation unit 268 calculates a list of candidate values C(q') for the intensity value of reconstructed image 294 in accordance with the expression C(q') =q'xD+m (where q'≥0, C(q')<256), and among these calculated candidate values C(q'), one with the smallest difference (absolute value) from corresponding value SI of side information 290 is determined as a corresponding intensity value of reconstructed image 294.

For example, considering the case where factor D = 8, remainder m = 3, and corresponding value SI of side information 290 = 8, candidate values C(q') are obtained as follows:

$$\text{Candidate value } C(0) = 0 \times 8 + 3 = 3 \qquad (\text{difference from SI} = 5)$$

$$\text{Candidate value } C(1) = 1 \times 8 + 3 = 11 \qquad (\text{difference from SI} = 3)$$

$$\text{Candidate value } C(2) = 2 \times 8 + 3 = 19 \qquad (\text{difference from SI} = 11)$$

...

Among these candidate values C(q'), candidate value C(1) with the smallest difference from corresponding value SI of side information 290 is selected, and the corresponding intensity value of reconstructed image 294 is determined as "11". The intensity value at each pixel location of reconstructed image 294 is thereby determined by each color component.

In this way, the process of reconstructing a target image shown in step S208 of Fig. 6 includes processing of determining factor D in accordance with the gradient for each pixel location of gradient image 292, and among candidate values C(q') calculated by the inverse modulo operation using determined factor D as a modulus and using the value at a corresponding pixel location of remainder image 194 as remainder m, determining one with the smallest difference from the value at a corresponding pixel location of side information 290 as the intensity value at a corresponding pixel location of target image 170.

As the final output of the decoding process according to the present embodiment, at least reconstructed image 294 obtained as a result of processing as well as reference images 172 and 182 as input are output and/or stored. As an option, depth map 174 of reference image 172 and depth map 184 of reference image 182 may be output. Furthermore, reconstructed image 294 may be resized to any size depending on the difference in size from original target image 170 and/or remainder image 194.

Although the above-described description has been given paying attention to the set of one target image 170 and two reference images 172 and 182, a similar process is executed on all target images and respective corresponding reference images set for a plurality of input images (multi-view images or a sequence of video frames).

[G. Advantages]

According to the present embodiment, side information which is more appropriate than in conventional cases can be generated, and reconstructed images can be improved in quality by using the side information according to the present embodiment.

The present embodiment is applicable to various applications for image processing systems, such as data representation of multi-view images or a new data format before image compression.

According to the present embodiment, more efficient representation can be derived using a remainder-based data format for large-scale multi-view images. Moreover, the converted data format can be used for devices with small power capacity, such as mobile devices. Therefore, according to the present embodiment, the possibility of providing 3D features more easily on mobile devices or low power consumption devices can be increased.

It should be understood that the embodiment disclosed herein is illustrative and non-restrictive in every respect. The scope of the present invention is defined by the claims not by the description above, and is intended to include any modification within the meaning and scope equivalent to the terms of the claims.

REFERENCE SIGNS LIST

10 camera; 100, 200 information processing apparatus; 102, 202 wireless transmission device; 104, 204 processor;

106, 206 memory; 108 camera interface; 110, 210 hard disk; 112, 212 image data; 114 encoding program; 116, 216 input unit; 118, 218 display unit; 120, 220 communication interface; 122, 222 bus; 150 input image buffer; 152, 252 depth information estimation unit; 154, 254 depth information buffer; 156 subsampling unit; 158, 258 image synthesis unit; 160, 260 side information selection unit; 162, 262 gradient image generation unit; 164, 264 factor selection unit; 166, 266 Lookup table; 168 module operation unit; 170 target image; 172, 182 reference image; 174, 184 depth map; 176,276 synthesized image; 178 subsampled image; 179 upsampled image; 190, 290 side information; 192, 292 gradient image; 194 remainder image; 208 projector interface; 214 decoding program; 250 input data buffer; 268 inverse module operation unit; 294 reconstructed image; 300 3D display device; 302 controller; 304 projector array; 306 diffusion film; 308 condenser lens; 400 wireless base station.

**Claims**

1. A method for reducing data size of a plurality of images containing mutually similar information, comprising the steps of:

   acquiring the plurality of images, and selecting, from among the plurality of images, a target image as well as a first reference image and a second reference image similar to the target image;
   generating a synthesized image corresponding to the target image based on the first reference image and the second reference image;
   generating side information which is information on a virtual view at a location of the target image, based on at least one of the target image and the synthesized image;
   generating a gradient image based on the side information;
   determining a factor in accordance with a gradient for each pixel location of the gradient image, and performing a modulo operation using, as a modulus, a factor corresponding to an intensity value at each pixel location of the target image, to generate a remainder image composed of remainders of respective pixel locations calculated by the modulo operation; and
   outputting the first reference image, the second reference image and the remainder image as information representing the target image, the first reference image and the second reference image.

2. The method according to claim 1, wherein the step of generating side information includes a step of combining a subsampled image of the target image and the synthesized image to generate the side information.

3. The method according to claim 1 or 2, wherein the step of generating a gradient image includes a step of generating an image in which a region in the side information with a larger textural change has a larger intensity.

4. The method according to any one of claims 1 to 3, wherein the step of generating a remainder image includes a step of selecting a factor corresponding to the gradient with reference to predetermined correspondence.

5. The method according to any one of claims 1 to 4, wherein the step of selecting includes steps of
   selecting the target image as well as the first reference image and the second reference image based on a baseline distance when the plurality of images are multi-view images, and
   selecting the target image as well as the first reference image and the second reference image based on a frame rate when the plurality of images represent a sequence of video frames.

6. The method according to any one of claims 1 to 5, further comprising the steps of:

   acquiring the first reference image, the second reference image and the remainder image having been output;
   generating a synthesized image corresponding to the target image based on the first reference image and the second reference image;
   generating side information based on acquired information and generating a gradient image based on the side information; and
   determining a factor in accordance with the gradient for each pixel location of the gradient image, and among candidate values calculated by an inverse modulo operation using the determined factor as a modulus and a value at a corresponding pixel location of the remainder image as a remainder, determining one with the smallest difference from a value at a corresponding pixel location of the side information as an intensity value at a corresponding pixel location of the target image.

7. A program for reducing data size of a plurality of images containing mutually similar information, the program causing a computer to execute the steps of:

acquiring the plurality of images, and selecting, from among the plurality of images, a target image as well as a first reference image and a second reference image similar to the target image;
generating a synthesized image corresponding to the target image based on the first reference image and the second reference image;
generating side information which is information on a virtual view at a location of the target image, based on at least one of the target image and the synthesized image;
generating a gradient image based on the side information;
determining a factor in accordance with a gradient for each pixel location of the gradient image, and performing a modulo operation using, as a modulus, a factor corresponding to an intensity value at each pixel location of the target image, to generate a remainder image composed of remainders of respective pixel locations calculated by the modulo operation; and
outputting the first reference image, the second reference image and the remainder image as information representing the target image, the first reference image and the second reference image.

8. An apparatus for reducing data size of a plurality of images containing mutually similar information, comprising:

a means for acquiring the plurality of images, and selecting, from among the plurality of images, a target image as well as a first reference image and a second reference image similar to the target image;
a means for generating a synthesized image corresponding to the target image based on the first reference image and the second reference image;
a means for generating side information which is information on a virtual view at a location of the target image, based on at least one of the target image and the synthesized image;
a means for generating a gradient image based on the side information;
a means for determining a factor in accordance with a gradient for each pixel location of the gradient image and performing a modulo operation using, as a modulus, a factor corresponding to an intensity value at each pixel location of the target image, to generate a remainder image composed of remainders of respective pixel locations calculated by the modulo operation; and
a means for outputting the first reference image, the second reference image and the remainder image as information representing the target image, the first reference image and the second reference image.

FIG.1

FIG.2

(a)

REFERENCE
IMAGE
(reference)

TARGET
IMAGE
(target)

REFERENCE
IMAGE
(reference)

182

170

172

CAMERA
POSITION
(PARALLAX)

REMAINDER
IMAGE
(Rem)

194

(b)

REFERENCE
IMAGE
(reference)

TARGET
IMAGE
(target)

TARGET
IMAGE
(target)

TARGET
IMAGE
(target)

REFERENCE
IMAGE
(reference)

182

170-3

170-2

170-1

172

CAMERA
POSITION
(PARALLAX)

REMAINDER
IMAGE
(Rem)

REMAINDER
IMAGE
(Rem)

REMAINDER
IMAGE
(Rem)

194-3

194-2

194-1

FIG.3

EP 2 908 527 A1

(a)

REFERENCE
IMAGE
(reference)

TARGET
IMAGE
(target)

REFERENCE
IMAGE
(reference)

TIME (FRAME)

182    170    172

REMAINDER
IMAGE
(Rem)    194

(b)

REFERENCE    TARGET    TARGET    TARGET    REFERENCE
IMAGE    IMAGE    IMAGE    IMAGE    IMAGE
(reference)    (target)    (target)    (target)    (reference)

TIME (FRAME)

18.735

182    170-3    170-2    170-1    172

REMAINDER
IMAGE
(Rem)    REMAINDER
IMAGE
(Rem)    REMAINDER
IMAGE
(Rem)

194-3    194-2    194-1

FIG.4

EP 2 908 527 A1

FIG.5

200

204 PROCESSOR

206 MEMORY

216 INPUT UNIT

218 DISPLAY UNIT

222

212 — IMAGE DATA

214 — DECODING PROGRAM

210

208 PROJECTOR INTERFACE

220 COMMUNICATION INTERFACE

202

· · · MULTI-VIEW IMAGE

3D DISPLAY DEVICE 300

EP 2 908 527 A1

# FIG.6

**ENCODING PROCESS**

S100
ACQUIRE AND STORE A PLURALITY OF IMAGES, AND SET TARGET IMAGE AND REFERENCE IMAGES

S102
GENERATE SYNTHESIZED IMAGE CORRESPONDING TO TARGET IMAGE FROM REFERENCE IMAGES

S104
GENERATE SIDE INFORMATION BASED ON TARGET IMAGE AND SYNTHESIZED IMAGE

S106
GENERATE GRADIENT IMAGE FROM SIDE INFORMATION

S108
GENERATE REMAINDER IMAGE FROM GENERATED GRADIENT IMAGE

S110
AT LEAST OUTPUT REMAINDER IMAGE AND REFERENCE IMAGES

END

**DECODING PROCESS**

S200
ACQUIRE INFORMATION OUTPUT AS A RESULT OF ENCODING PROCESS

S202
GENERATE SYNTHESIZED IMAGE CORRESPONDING TO TARGET IMAGE FROM REFERENCE IMAGES

S204
GENERATE SIDE INFORMATION FROM ACQURED INFORMATION

S206
GENERATE GRADIENT IMAGE FROM GENERATED SIDE INFORMATION

S208
RECONSTRUCT TARGET IMAGE FROM SIDE INFORMATION, GRADIENT IMAGE AND REMAINDER IMAGE

S210
OUTPUT RECONSTRUCTED TARGET IMAGE AND REFERENCE IMAGES

END

EP 2 908 527 A1

FIG.7

100

10

Input:

DEPTH INFORMATION ESTIMATION UNIT 152

SUBSAMPLING UNIT 156

IMAGE SYNTHESIS UNIT 158

FACTOR SELECTION UNIT 164

LOOKUP TABLE 166

SIDE INFORMATION SELECTION UNIT 160

GRADIENT IMAGE GENERATION UNIT 162

MODULO OPERATION UNIT 168

$VT = q \times D + Remainder$

VT (gradient) 192

VT (side information) 190

VT (sub-sampled) 178

VT (virtual)

VT (Remainder) 194

150, 172, 154, 174, 170, 176, 182, 184, 172, 174, 178

Output:

VR / DR, VL / DL

FIG.8

# FIG.9

VT(sub-sampled)

up-sampling →

179

178

ERROR
DISTRIBUTION(R)

176

VT(virtual)

FIG.10

(a)

| Gradient Range | 0 | 1 | 2-3 | 4-7 | 8-15 | 16-31 | 32-63 | 64-127 | 128-255 |
|---|---|---|---|---|---|---|---|---|---|
| D | 1 | 2 | 4 | 8 | 16 | 32 | 64 | 128 | 256 |

(b)

| Gradient Range | 0-7 | 8-127 | 128-255 |
|---|---|---|---|
| D | 8 | 128 | 256 |

FIG.11

FIG.12

Target ⌒170

P mod D ⟹

Remainder ⌒194

FIG.13

170

FIG.14

194

EP 2 908 527 A1

# FIG.15

Input:

182 178 194 172

... VL ... Rem ... VR ... 250
184—DL ss DR—174

DEPTH INFORMATION
ESTIMATION UNIT 252

... VL—182 ... VR—172 ... 254
DL—184 DR—174

VT(sub-sampled) 178

VR/DR

VL/DL → IMAGE SYNTHESIS UNIT → VT(virtual) 276 → SIDE INFORMATION SELECTION UNIT 260 → VT (side information) 290 → GRADIENT IMAGE GENERATION UNIT 262 → VT (gradient) 292

258

q' × D + Remainder = VT'

VT(Remainder)

→ INVERSE MODULO OPERATION UNIT 294

VT(gradient) → FACTOR SELECTION UNIT 264 → D → VT'

268

LOOKUP TABLE 266

Output: 182 294 172

... VL ... VT' ... VR ...

200

EP 2 908 527 A1

EP 2 908 527 A1

FIG.16

# EP 2 908 527 A1

## INTERNATIONAL SEARCH REPORT

| International application No. |
|---|
| PCT/JP2013/077516 |

### A. CLASSIFICATION OF SUBJECT MATTER
*H04N19/50*(2014.01)i, *H04N13/02*(2006.01)i

According to International Patent Classification (IPC) or to both national classification and IPC

### B. FIELDS SEARCHED

Minimum documentation searched (classification system followed by classification symbols)
H04N19/00, H04N13/00-15/00

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | Yuta HIGUCHI et al., "N-View N-depth Coding for Free View Generation", IEICE Technical Report, The Institute of Electronics, Information and Communication Engineers, 08 December 2011 (08. 12.2011), vol.111, no.349, pages 1 to 6 | 1-8 |
| A | Hisayoshi FURIHATA et al., "Residual Prediction for Free Viewpoint Image Generation", IEICE Technical Report, The Institute of Electronics, Information and Communication Engineers, 21 May 2009 (21.05.2009), vol.109, no.63, pages 199 to 203 | 1-8 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 06 January, 2014 (06.01.14) | 14 January, 2014 (14.01.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

34

**INTERNATIONAL SEARCH REPORT**

| International application No. |
|---|
| PCT/JP2013/077516 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 4-343576 A  (Matsushita Electric Industrial Co., Ltd.), 30 November 1992 (30.11.1992), paragraphs [0009], [0017] to [0109]; fig. 1 to 5 & US 5392037 A | 1-8 |
| A | JP 2006-261835 A  (Toshiba Corp.), 28 September 2006 (28.09.2006), paragraphs [0033] to [0045]; fig. 2 to 3 & US 2006/0222241 A1 | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MEHRDAD PANAHPOUR TEHRANI ; TOSHIAKI FUJII ; MASAYUKI TANIMOTO.** The Adaptive Distributed Source Coding of Multi-View Images in Camera Sensor Networks. *IEICE Trans,* 2005, vol. E88-A (10), 2835-2843

- **R. SZELISKI ; R. ZABIH ; D. SCHARSTEIN ; O. VEKSLER ; V. KOLMOGOROV ; A. AGARWALA ; M. TAPPEN ; C. ROTHER.** A comparative study of energy minimization methods for Markov random fields with smoothness-based priors. *IEEE Trans. Pattern Anal. Machine Intell.,* 2008, vol. 30 (6), 1068-1080

- **Y. BOYKOV ; O. VEKSLER ; R. ZABIH.** Fast approximate energy minimization via graph cuts. *IEEE Trans. Pattern Anal. Machine Intell.,* November 2001, vol. 23, 1222-1239

- **Y. MORI ; N. FUKUSHIMA ; T. YENDO ; T. FUJII ; M. TANIMOTO.** View generation with 3D warping using depth information for FTV. *Signal Process.: Image Commun.,* January 2009, vol. 24, 65-72

- **L. YANG ; T. YENDO ; M. PANAHPOUR TEHRANI ; T. FUJII ; M. TANIMOTO.** Probabilistic reliability based view synthesis for FTV. *Proc. ICIP,* September 2010, 1785-1788

- **N. FUKUSHIMA ; T. FUJII ; Y. ISHIBASHI ; T. YENDO ; M. TANIMOTO.** Real-time free viewpoint image rendering by using fast multi-pass dynamic programming. *Proc. 3DTV-CON,* June 2010

- **A. SMOLIC ; P. KAUFF ; S. KNORR ; A. HORNUNG ; M. KUNTER ; M. MULLER ; M. LANG.** Three-Dimensional Video Postproduction and Processing. *Proc. IEEE,* April 2011, vol. 99 (4), 607-625